Europäisches Patentamt

(19) European Patent Office

Office européen des brevets

(11) EP 0 606 191 B1

(12) **EUROPEAN PATENT SPECIFICATION**

(45) Date of publication and mention
of the grant of the patent:
**19.03.1997 Bulletin 1997/12**

(51) Int. Cl.$^6$: **B62K 5/04**, B62D 9/02,
B60G 21/00

(21) Application number: **94500001.6**

(22) Date of filing: **03.01.1994**

(54) **Wheeled vehicle comprising an oscillating axle and an articulated rocking lever having locking possibilities**

Radfahrzeug mit Pendelachse und blockierbarem Gelenkarm

Véhicule à roues avec essieu oscillant et balancier articulé blocable

(84) Designated Contracting States:
**DE FR GB IT PT**

(30) Priority: **04.01.1993 ES 9300004**

(43) Date of publication of application:
**13.07.1994 Bulletin 1994/28**

(73) Proprietor: **Calleja Vidal, Carlos**
**E-18002 Granada (ES)**

(72) Inventor: **Calleja Vidal, Carlos**
**E-18002 Granada (ES)**

(74) Representative: **Garcia Cabrerizo, Francisco**
**OFICINA GARCIA CABRERIZO S.L.**
**Vitruvio 23**
**28006 Madrid (ES)**

(56) References cited:
FR-A- 1 562 248          FR-A- 2 277 261
FR-A- 2 550 507          FR-A- 2 616 405
US-A- 4 887 829

## Description

The invention relates to a tricycle provided with an articulated balancer with an oscillating axle and having locking possibilities. The tricycle is a light-weight, narrow vehicle with a high center of gravity and having dynamic stability as well as static balance in curves. This vehicle which has one front wheel and two rear ones could be related to a conventional motorcycle ; this invention is directed to this sector of the industry.

The purpose of the vehicle put forward herein is to combine the manoeuvrability of a motorcycle with higher levels of safety and convenience. Just like in the case of any motorcycle, the stability when taking a curve is obtained by a lateral shifting of its center of gravity, caused by the lateral tilting of the vehicle when approaching a curve.

Documents FR-A-2,616,405 and US-A-4,887,829 show a tricycle having a large rear track gage so that the center of gravity thereof is always, even when the tricycle is inclined, above the rear track gage, securing its static equilibrium without a need for a blocking device. Therefore, this tricycle has a lesser manoeuvrability than a classical two-wheeled motorcycle. Document FR-A-2,616,405 corresponds to preamble of the enclosed claims 1 and 2.

Document FR-A-1,562,248 discloses a tricycle using a blocking device constituted by a centrifugal drum brake, but the rear wheels of this tricycle are rigid and cannot oscillate, only a main front frame being able to tilt. Therefore, this blocking device does not provide a good level of safety, particularly in case of a fast changing of direction.

The purpose of this invention is therefore to provide a three-wheeled vehicle able to tilt laterally through an opposite upward/downward oscillating movement of the two rear wheels, with the combination of the high manoeuvrability of a classical two-wheeled motorcycle, that is a faster lateral tilting, and higher levels of safety, that is an improved static and dynamic stability.

The invention solves this problem by providing a tricycle according to the enclosed claims 1 and 2.

ADVANTAGES OF THE INVENTION. Compared with a conventional motorcycle, the vehicle provided with the "articulated balancer with an oscillating axle and having locking possibilities", provides more convenience and greater safety than a motorcycle without, however, losing its maneuverability or nature. With respect to its convenience, among others, can be mentioned the following advantages:

1) The driver must not hold the vehicle with his legs when he momentarily stops its operation because the vehicle maintains its verticality by itself since the rotation of the balancer is locked.
2) In view of the above reason, the vehicle allows very enveloping cowlings that assure great protection against cold weather and rain. Therefore, this mechanism is the ideal attachment for projects that, just like BMW's C-1, have the aim to develop vehicles that can be easily maneuvered in the chaotic city traffic without, however, having to renounce a minimum of safety and convenience.
3) It is not necessary to make any effort to park the vehicle, even on slowed road surfaces since it is not equipped with stands.
4) in the case of breakdowns, the vehicle can be easily pushed by hand without the risk that it would fall to one side. Moreover, due to that it stands on its own, the vehicle's cleaning and maintenance operations are easier to carry out.
5) The elimination of weight as the number one enemy of the motorist, will allow that the vehicle be provided with all sorts of elements that contribute to its convenience and safety: automatic locking devices for the balancer; an integral braking with only one foot control; an anti-locking system for the ABS brakes; fuel tanks of greater capacity; wider and more comfortable seats; etc.
6) The user friendliness of this vehicle is appropriate for automatic transmissions as well as "reverse" in most varies implementations.
7) The vehicle will inspire the driver with trust. This will make this type of vehicle accessible to a wide sector of users who are reluctant to get on a motorcycle.

With respect to safety, the vehicle equipped with the "articulated balancer of oscillating axis and having locking possibilities", presents the following advantages with respect to any conventional motorcycle:

1) It considerably reduces the possibility of a rear train slipping (the most frequent one in the case of motorcycles), be it because of excessive speed in the curves or improper acceleration or braking when the vehicle is tilted.
2) If offers more traction in any situation and on any type of terrain, in particular when they are slippery.
3) It brakes better. To a better holding due to the third wheel, there must be added, in particular, a greater stability while braking.
4) The locking of the balance's rotation allows to maintain the balance of the vehicle in the case of slipping, additionally providing a safety margin in this and other dangerous situations.

The stated advantages 1, 2 and 3 don't require an explanation, due to deeming them evident, but with respect to number 4 we shall enter into some details.

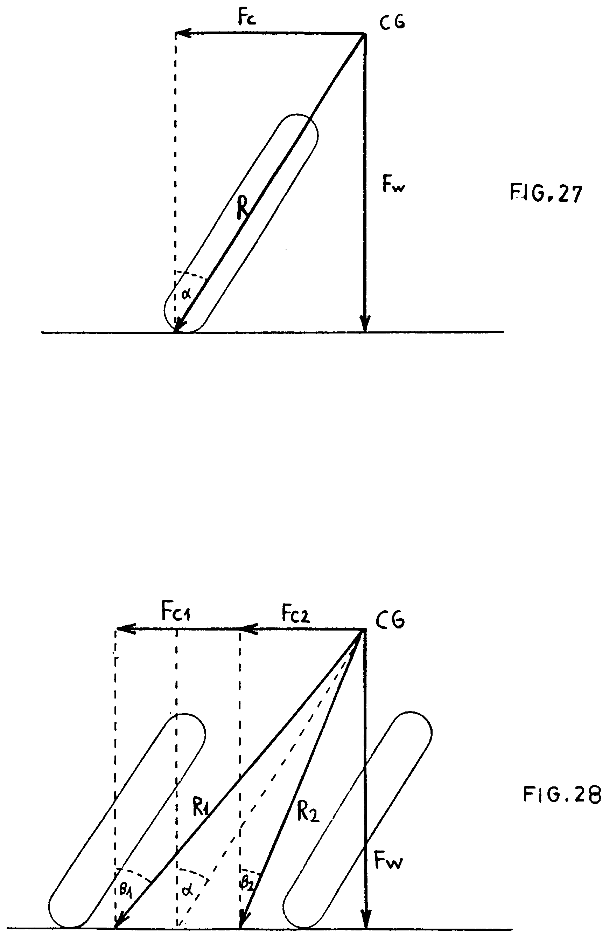

Be looking at Fig. 27 we see that the balance of a conventional motorcycle requires that the force R, the resultant of the other two forces that must be considered (Fc = centrifugal force; Fw = weight of the vehicle) passes through the ideal line of points to the ground that connects the contact points wheels-to-ground. The driver achieves this by tilting, almost instinctively, at the exact angle that corresponds depending on the speed of the motorcycle and the radius of the curve he is taking. In this situation, any slight slippage of the front or rear assembly results in an immediate variation of the tilt angle, which causes the loss of balance and the subsequent mishap or accident.

In the vehicle set forth herein, if the driver realizes that the situation may become dangerous (excessive speed on wet ground, gravel, oily spots, etc.) he prepares to lock the balancer so that, in the case a slipping would occur, the vehicle's tilt angle would not be changed, thus maintaining the balance and facilitating its control. In vehicles equipped with ABS, this system could automatically lock the balancer's rotation when it detects any locking of the wheels or notes any difference in the rotating of the front and rear wheels.

There exist other situations in which the locking of the balancer establishes a safety margin. Thus, an excessive speed when entering a curve, or a curve of variable radius taken at an improper speed, would compel the driver to tilt the motorcycle to a greater extent than he could be psychologically prepared, or more than advisable for the treadwear of the tires or the condition of the roadway. In such a situation, the driver, aware of the danger of slipping by applying the brake when tilting, tends to increase the radius of the curve resulting in a possible running off the roadway or an entering into the oncoming traffic lane.

Under these circumstances, the locking of the balancer establishes, as we will see, a safety margin that allows to overcome such risks without the need of an excessive tilting of the vehicle; futhermore, the tires would operate within their best range of adherence.

The following example will explain the foregoing. Assuming that the vehicle + driver have a weight of $W = 250$ kilograms; that the speed at which the vehicle travels is 90 km/hour ($V = 25$ meters/second); that $r = 100$ meters is the radius of the curve; that $h = 0.85$ meters is the height of the center of gravity with the vehicle in a vertical position; and that $a = 0.36$ meters is the width of the rear track gage being the vehicle in a vertical position.

In a normal situation (free balancer), the tilt angle with respect to the verticality of the vehicle is the same as that for a motorcycle which, barring an error, is of 32º32'. However, as shown in Fig. 28, with the locked balancer, the tilt angle at which the force R is effective is not the only one but it also is susceptible to a range between $R_1$ and $R_2$, within which the vehicle maintains its balance.

The higher or lower range of these values depends on the width of the rear track gage, on the previous tilt angle of the vehicle, on the heigh of the center of gravity of the vehicle, and on the point at which is said center of gravity with respect to the wheel base of the vehicle. In the above example, if we assume that the vehicle's center of gravity is located at the rear 2/3 of the vehicle's wheel base (measured from the center of the front wheel to the midpoint between the center of the rear wheels), the maximum ($B_1$) and minimum ($B_2$) tilt values

of $R_1$ and $R_2$ barring in error, would be 39º54' and 23º42', respectively.

This means that the vehicle with the balancer locked at a 32º32' tilt is capable to compensate a centrifugal force which for a motorcycle would require tilts between 23º42' and 39º54' that correspond to speeds between 74.68 km/h and 103.06 km/h for a 100 m radius of curve. In other words, for a speed of 90 km/h, without losing balance it allows for a variation of the radius of the curve between 145.2 meters and 76.2 meters.

It is obvious that the manual locking of the balancer's rotating requires, just like everything, a certain degree of training. However, such locking can be done automatically. The possibility of linking such locking to the ABS system was discussed earlier but it can be supplemented with a microprocessor that by analyzing parameters, such as speed, tilt, centrifugal force, acceleration, deceleration, etc. determines the exact moment for the automatic locking and unlocking of the rotating of the balancer.

DRAWINGS

The continuous references to drawings made during the following description have the purpose of making them to be understable. Therefore, the following figures will be the subject of comments:

Figure 1 is a rear perspective view of the inventive vehicle.

Figure 2 shows three rear views of the vehicle shown in figure 1, during its tilting on a side.

Figure 3 is similar to figure 2, but shows the vehicle tilting on the other side.

Figure 4 shows three rear views of the vehicle respectively in its central position and in its two opposite tilted positions, with the rear wheels shown in dotted lines to illustrate the motion of the connecting rods.

Figure 5 is a perspective view of a T-shaped assembly incorporating the axle of the balancer.

Figure 6 is a schematical view of figure 4 illustrating the suspension of the rear wheel train.

Figure 7 is a perspective view of a balancer incorporating a drum brake and not linked to its axle, according to a first embodiment of the invention.

Figure 8 is similar to figure 5, but shows the assembly incorporating a disc brake and an upper arm for fastening a shock absorber.

Figure 9 is similar to figure 8, but shows the assembly provided with a fastening device instead of the upper arm.

Figure 10 is similar to figure 7, but shows the balancer without the drum brake.

Figures 11 and 12 are similar to figures 8 and 9 respectively, except that the assembly does not comprise the axle of the balancer.

Figure 13 is a partial and exploded view of the connection through ball joints of a connecting rod between a swinging fork and the balancer.

Figures 14 and 15 show in cross-section a rear and side view of figure 13 in the mounted position, respectively.

Figure 16 is a perspective view of the balancer provided with its connecting rods to be fastened upon the swinging forks.

Figure 17 is a side view of figure 1.

Figure 18 is a view similar to figure 17, but showing a second embodiment.

Figures 19 and 20 are plan views of the brake disc respectively in its rest and braking positions.

- Figures 21 and 22 show a mode of embodiment according to claim 1 when the balancer is placed at an upper plane to that of swinging forks.
- Figures 23 and 24 show a mode of embodiment according to claim 2 when the balancer is placed at a lower plane to that of swinging forks.
- Figures 25 and 26 show a mode of embodiment according to claim 3 when the balancer is placed at an upper plane to that of swinging forks.
- Figures 27 and 28 are schematical views of the balance tilt angle of a conventional motorcycle and of the present tricycle, respectively.

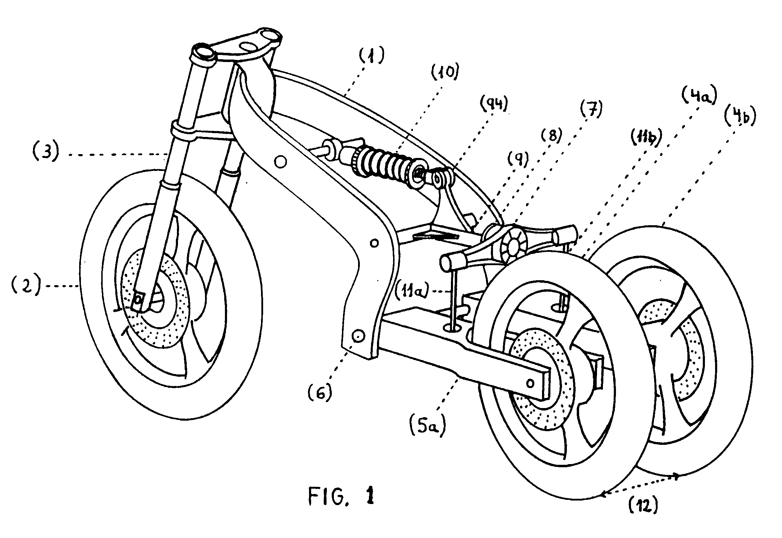

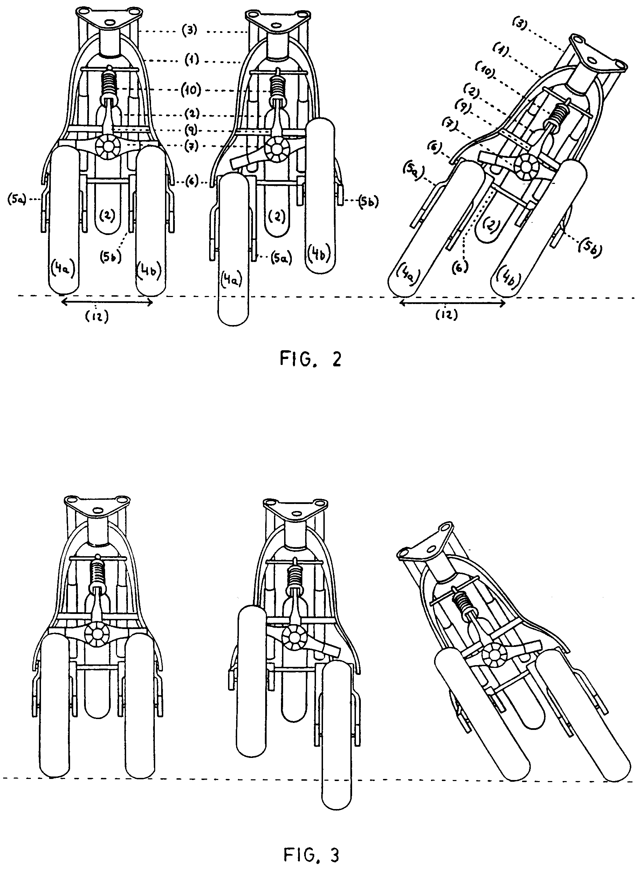

To obtain the lateral tilting of the vehicle described herein (Fig. 1), it is necessary to provide each rear wheel (4a, 4b) with an upward/downward oscillating movement, so that when one the wheels rises the one other one descends to the same extent, thus causing the tilting of the vehicle (Figs. 2 and 3).

Thus, the created technical problem consists in obtaining an appropriate performance of the vehicle's rear train, so that, although it consists of two wheels, it facilitates the lateral tilting of the vehicle, whether it is to one side or to the other according to the driver's requirement.

To this effect, each of the rear wheels (4a, 4b) is connected to the frame (1) of the vehicle by means of a swivel-mounted fork (5a, 5b) (hereinafter referred to as "swinging fork") similar to the one used in conventional motorcycles. Both swinging forks (5a, 5b) are held at their front end (according to the direction of travel of the vehicle) by one only axle (6), not linked to them, that is anchored to the frame (1) at its lower rear portion in a transverse direction of travel. Each of the rear wheels has its own axle that is located at the rear end of each swinging fork.

The only front wheel (2) of the vehicle is connected to the frame (1) by means of a hydraulic, telescopic fork (3), identical to the one used for conventional motorcycles, having also the same fastening and directional geometry.

The described oscillating movement of the rear wheels (4a, 4b) is obtained by means of a lever, that we shall call "balancer" (7, 7'), that at its midpoint is held fast by a axle (97, 98), around which it rotates. The balancer is installed perpendicular to the swinging forks (5a, 5b) and, depending on the characteristics of performance required by the vehicle, it can be located on a plane that is either higher or lower than the plane of the swinging forks.

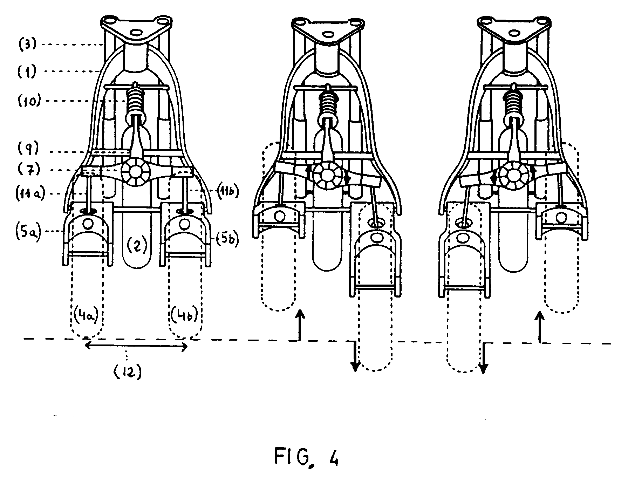

At each end of the balancer is hinged a connecting rod (11a, 11b) that links to the swinging fork at its end (5a, 5b), so that when one swinging fork ascends it causes a rotary motion of the balancer (7, 7') which, in turn, causes the swinging fork of the other end to descend, and vice versa (Fig. 4).

Thus, it can be gathered that by means of the connecting rods (11a, 11b) the rotary motion of the balancer (7, 7') becomes an up-and-down motion of the swinging forks (5a, 5b). Several factors must be taken into consideration for this transformation of movement. Thus, by way of example, the initial parallelism of the connecting rods (11a, 11b) is lost with the rotating of the balancer (7, 7'), due to that the latter is of fixed length; moreover, the angles formed by the connecting rod with the balancer or which the swinging forks are continuously modified by the action of the mechanism.

It thus becomes necessary to provide it with an adequate system of hinged joints between its various elements to eliminate the stresses to which its performance could be exposed because of the constant modification of values and their ratios, thus obtaining a smooth and resistance-free transformation of movements.

The suitable hinged joint is the so-called "ball-and-socket" joint which, within some of the values, allows the connecting rods (11a, 11b) to form any angle with respect to the balancer (7, 7') and the swinging forks (5a, 5b). Therefore, each end of the connecting rods will be provided with a ball joint (112) having a diameter greater than that of the rod (111) that links them. Inversely, each end of the balancer and each of the swinging forks must be provided with the corresponding sockets that enable the housing, without too much play, of the connecting rods' ball joints.

As matter of course, the axle (97, 98) that holds fast the balancer (7, 7') at its midpoint is parallel to the swinging forks (5a, 5b) and equidistant to them when the vehicle is in a vertical position or position of rest. It can be located at a higher or lower plane than that of the swinging forks (5a, 5b), as mentioned earlier when describing the location of the balancer (7, 7').

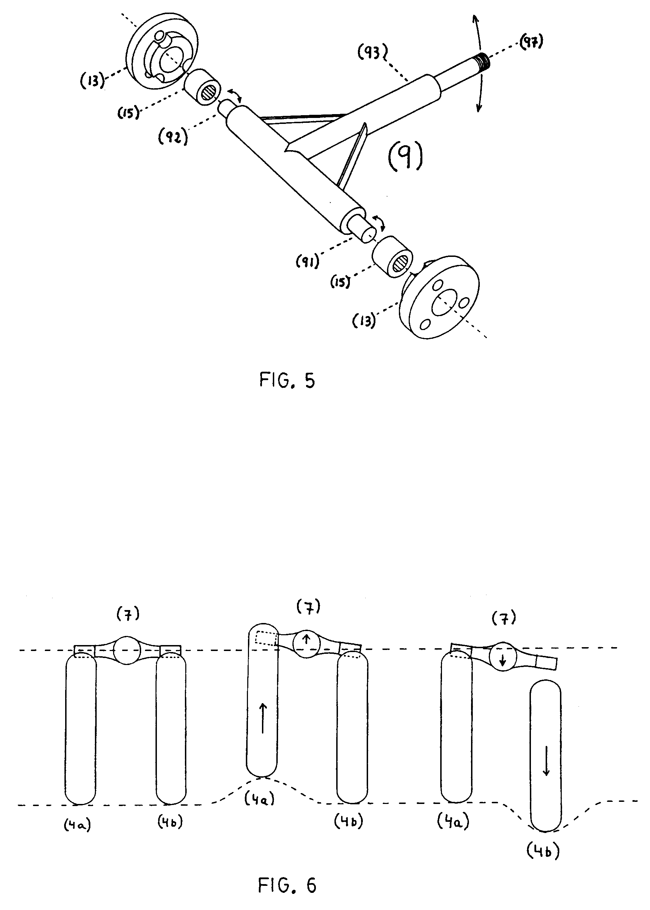

In order to be able to provide suspension to the vehicle's rear train, the connection of this axle to the vehicle's frame cannot be fixed or rigid, but in such a manner that it allows an oscillating upward/downward movement controlled by one only shock absorber (10), similar to the one used for modern motorcycles (Figs. 5 and 6).

To obtain the oscillating motion of the axle it is appealed to an assembly (9, 9') which shall be of T-shape. Being this assembly fastened to the vehicle's frame (1) at its front ends (91, 92) (depending on the direction of travel), the rear end (93) allows an up-and-down oscillating motion. As matter of course, the fastening of the ends (91, 92) of the assembly to the vehicle's frame (1) must incorporate the pertinent antifriction bearings (15), that would allow the described motion without any resistance of whatsoever kind. See Fig. 5.

The possibility of locking at wish the rotating of the balancer (7, 7') offers important applications, providing the vehicle with static balance or setting safety margins in dangerous situations.

The locking system appropriate for this invention because of its simplicity, low cost and suitable adaptation is the so-called drum locking system which, as we will see, operates and actuates in a manner similar to that of the already known drum brake. The only difference that can be noted with respect to the customary drum brake is the practically non-existing friction between the shoes and the drum which allows that the material of manufacture of the shoes be changed, as well as to provide the drum with a certain roughness or internal grooving in order to achieve, in this manner, effective locking with the smallest possible diameter of the drum.

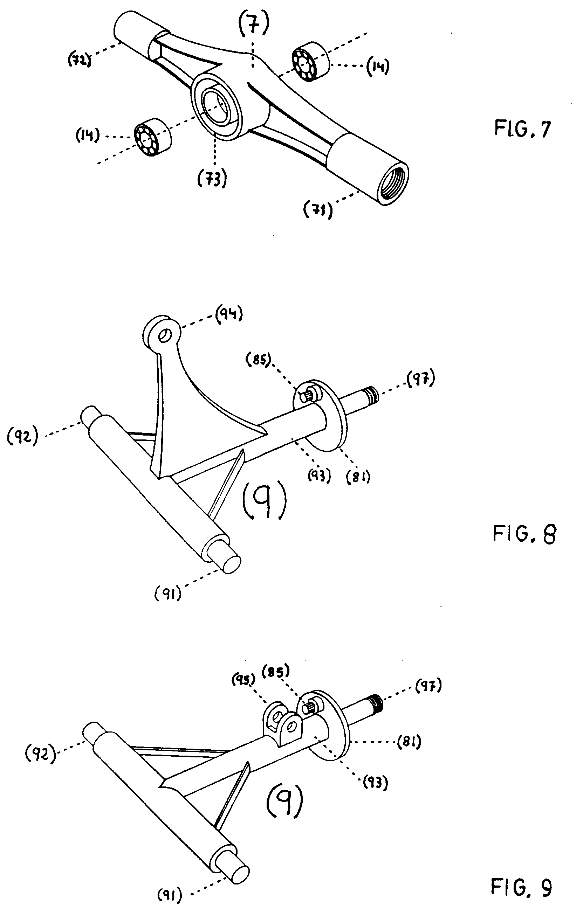

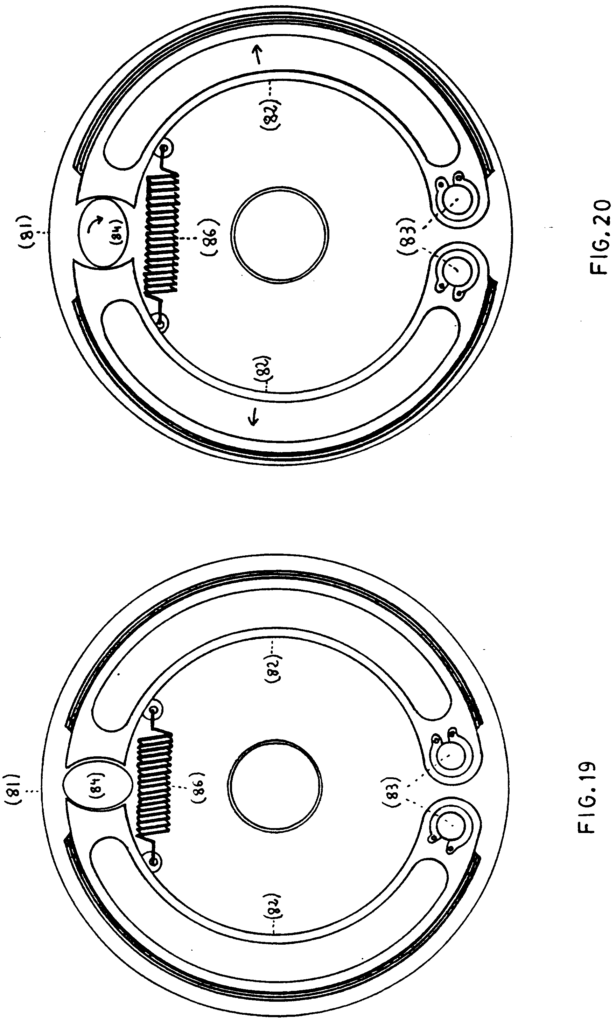

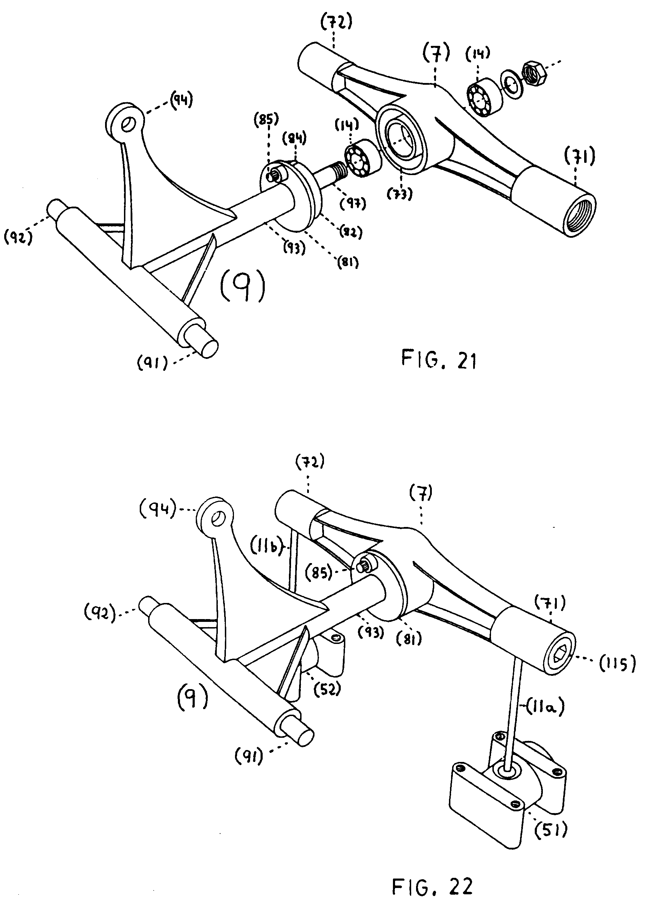

If the balancer (7) is not linked to its axle (97), the brake disc (81), that incorporates the brake shoes (82), its guides (83), the shock-absorbent back springs (86), the drive cam (84) and its axle (85), is installed in the rear end (93) of the assembly (9), as shown in Figure 21. When the brake cam (84) is actuated (Figs. 19 and 20), the shoes (82) expand and rub against the drum, thus preventing that it rotates. Obviously, the drum (73) must be an integral part of the balancer (7), either forming one only element with it (Fig. 7) or being integrally linked to it.

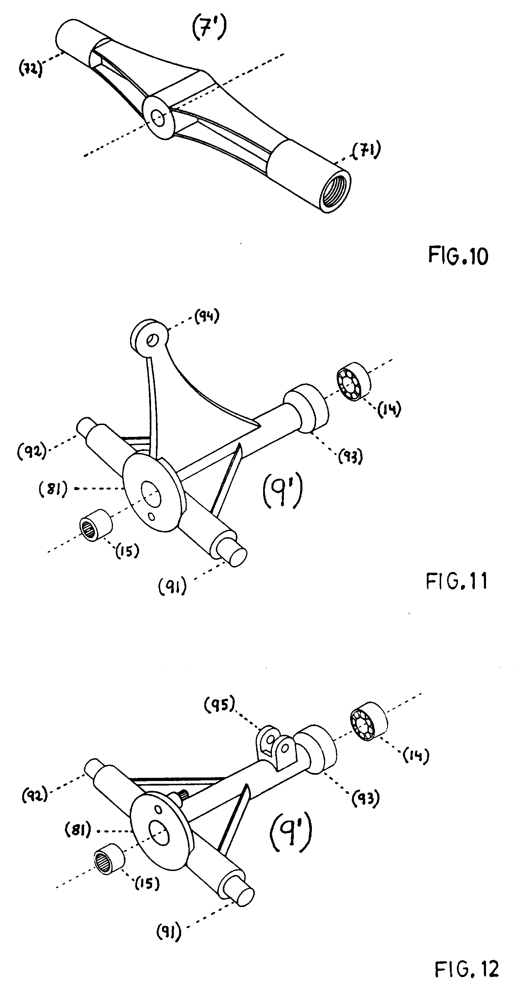

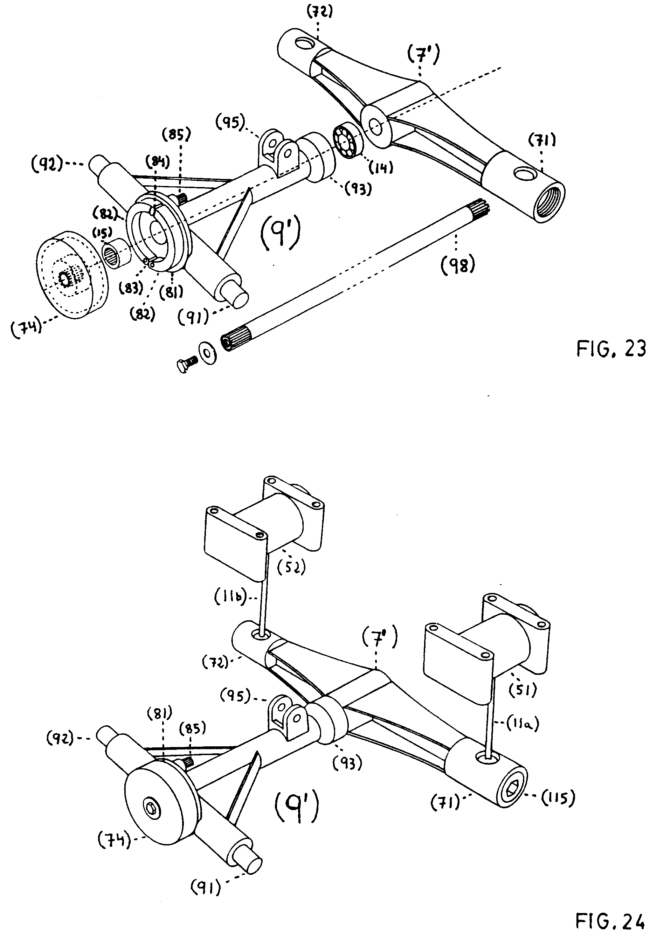

If the balancer (7') is linked to the axle, such an axle (98) will be independent from the assembly (9'). This axle is introduced longitudinally in the assembly (9') of Figures 11 and 12, with its fore protuding (depending on the vehicle's direction of travel) for the connection with the drum (74) and with its rear extremity protruding for the connection with the balancer (7') (Fig. 23). The brake disc (81) with all of its components is located at the front central part of the assembly (9') to face the independent drum (74).

METHOD OF CONSTRUCTION OF THE INVENTION. The construction of the articulated balancer with oscillating axle and having locking possibilities consists of the following parts or elements:

BALANCER (7, 7'). Of solid, light-weight construction to prevent torsions and inertias, it is advisable that it be manufactured in one only piece which, depending on the construction, can be incorporated into the drum brake (Fig. 7) or not (Fig. 10). At the ends of the balancer will be installed the ball joints (71, 72), reference to which will be made later.

In case the balancer (7) and its axle (97) are not in one piece, there must be installed the appropriate antifriction bearings that will allow the balancer to rotate without resistance around the axle. By way of indication, Figure 7 shows ball bearings of angular contact with a double row of balls rollers (14) at both ends of the balancer set in the recesses provided to this effect.

In case the balancer (7') and its axle (98) were one only piece, the antifriction bearings would be housed in the assembly (9'). As shown in Figures 11 and 12, needle bearings (15) are suggested for the front end and ball bearings (14) for the rear end.

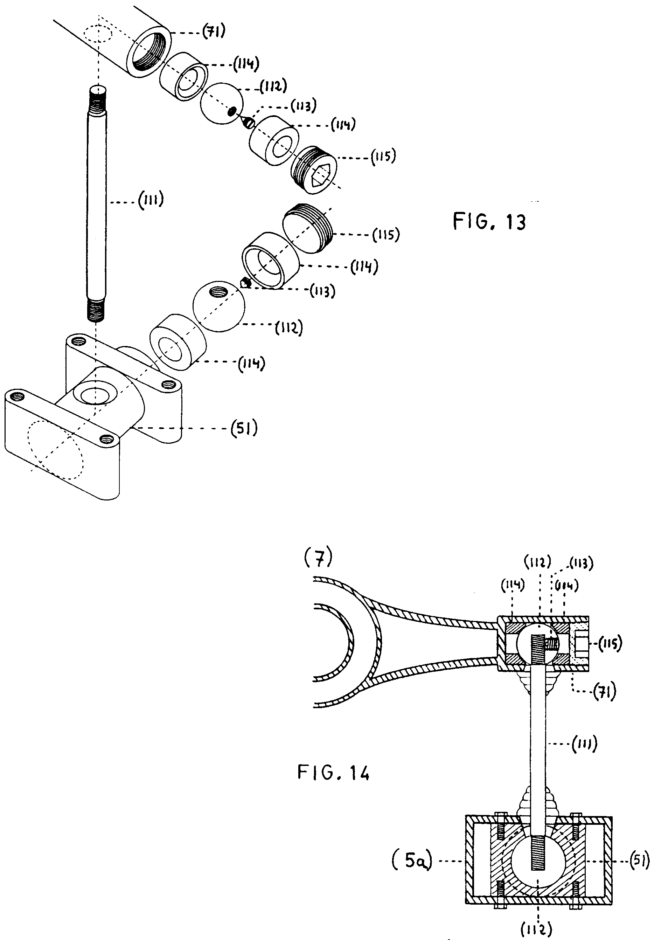

BALL JOINTS OF THE BALANCER (71, 72). Located at both ends of the balancer, they are an integral part of it. In case the chosen system of adapting the hinged joint by means of "ball-and-socket" would require it, they must allow to be disassembled in order to insert into them the balls (112) of the connecting rods (11a, 11b). As an alternative, in case the balls of the connecting rods were removable, they could be laterally inserted into the ball joints of the balancer, being the ball roller held between spherical half-bearings (114), as shown in Figures 13 and 14.

The hinged joint must be suitably lubricated in order to minimize the frictions between the ball (112) and the half-bearings (114). Also, the entering of dirt must be prevented by installing some type of rubber or plastic protection of bellows type that would not impair the play of the hinged joint.

CONNECTING RODS (11a, 11b). There are two and their function is that of converting the rotary motion of the balancer (7, 7') to an up and down motion of the swinging forks (5a, 5b) or vice versa. At each of their ends they are provided with a ball (112) with a diameter greater than that of the rod (111) that connects them. One of the balls of each of the connecting rods is housed in the ball joint of the balancer (71, 72) while the other one is housed in the ball joint of the swinging fork (51, 52) at the same side. The balls can be removed or not, depending on the assembly system used for this type of hinged joint.

Figures 13, 14, 15 and 16 show, by way of indication, a system of adaptation that requires the disassembly of the two balls of each connecting rods. Both balls (112) are tapped to the rod (111) that connects them, this connection being secured by means of a small setscrew (113). The opening in each ball into which is inserted the setscrew allows also the immobilization of the ball once it is inserted into the ball joint, which allows a strong threading of the rod.

BALL JOINTS OF THE SWINGING FORKS. At each swinging fork (5a, 5b) in an area near the point where the fork splits is installed a ball joint (51, 52) having the same function as that of the balancer, that is provided with the mentioned lubrication and rubber or plastic protectors. The options for the construction differ depending on the type of swinging forks used and on the chosen assembly system.

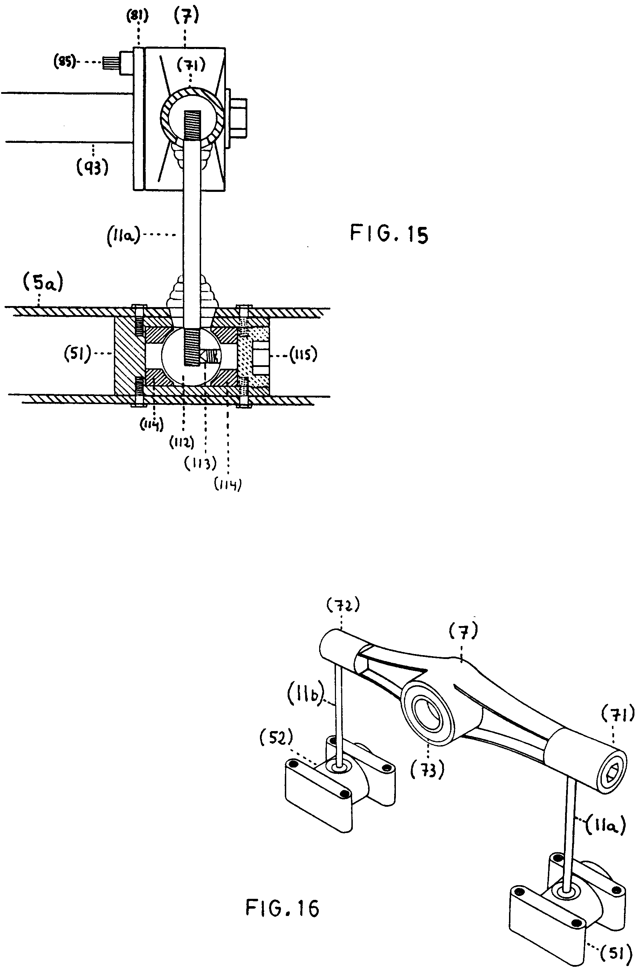

As shown in Figures 13 and 15, the suggested solution for the connecting rod-swinging fork joint is identical to the one described for the connection rod-balancer. The ball joint (51, 52) of the swinging fork, constructed independently of the latter, is inserted inside the swinging fork (5a, 5b), which is hollow in the area in front of where it splits and is secured to it by means of screws or welds. The opening of the ball joint through which are inserted the half-bearings (114) and the ball (112) is located in the area of the splitting, as shown in Figure 4.

ASSEMBLY TO FIX THE AXLE OF THE BALANCER (9, 9'). As mentioned earlier, for the balancer to move up and down it must be fastened to the vehicle's frame by means of a assembly that is provided with the appropriate antifriction bearings (15) that enable such a motion (Fig. 5).

In case the axle is not an integral part of the balancer (7), the assembly (9) will incorporate the axle (97) as well as the brake disc (81), as shown in Figures 8 and 9.

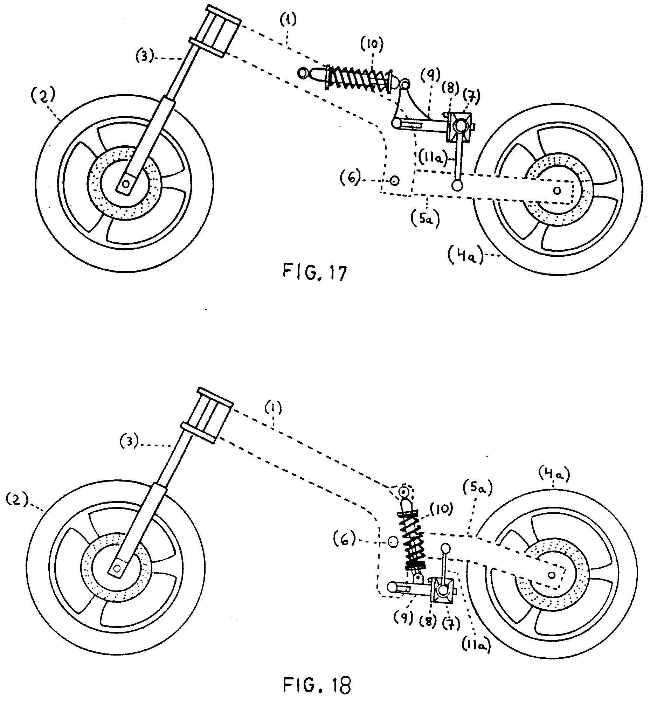

As shown in Figure 8, the assembly (9) comprises an upper arm (94) for the coupling of the shock absorber (10). This type of assembly is deemed appropriate when the balancer (7) is installed at a plane higher than that of the swinging forks (5a, 5b), in order to avoid an excessive height for the fastening of the shock absorber (10) to the vehicle's frame (1), due to that said shock absorber will be installed at a practically horizontal position (Fig. 17).

The fastening device (95) in Figure 9 serves for the fastening of the shock absorber (10) in an almost vertical position when the balancer is located a lower plane than that of the swinging forks (Fig. 18).

In case the axle is an integral part of the balancer (7'), the assembly (9') does not comprise the axle (98), that is independent, but rather a guide for it, where it is introduced longitudinally. The upper arm (94) of the coupling (Fig. 11) or the coupling device (95) (Fig. 12) show us the method of fastening the shock absorber (10) as explained above.

In all of the above suggestions it was assumed that the sole shock absorber (10) would be directly fastened to the assembly (9, 9'). Nonetheless, the control of the oscillating motion of the balancer's axle (97, 98) can be carried out by means of a system of articulated connecting rods inserted between the assembly (9, 9') and the shock absorber (10). It is not deemed necessary to develop this possibility but only to mention it, since this alternative is not a part of the contents of the claims.

Finally, it must be mentioned that the coupling of the assembly (9, 9') to the frame (1) can be carried out by various means, one of which is shown, by way of indication in Figure 5 in which, as it can be seen, the entire assembly (9, 9') is fastened by means of two independent elements (13) located at each end (91, 92) that are screwed on to the vehicle's frame (1).

LOCKING DEVICE (8). It consists of the following parts:

1) The brake disc (81), that comprises the shoes (82), their guides (83), the shock-absorbent back springs (86), the drive cam (84) and its axle (85) (Figs. 19 and 20).
2) The brake drum (73, 74) against which rub the brake shoes (82) when the drive cam (84) is actuated thus preventing its rotating.

The location of these elements shall differ depending on whether the balancer is an integral part or not of its axle.

In case the axle (97) is not an integral part of the balancer (7), the brake disc (81) with all of its elements is located in the rear end (93) of the assembly (9), becoming an integral part of the assembly. The drum (73) will be connected to the balancer (7) being an integral part of it (Figs. 21 and 22).

In case the axle (98) is an integral part of the balancer (7'), the brake disc (81) with all of its elements is located in the front portion of the assembly (9'), becoming a part of it. The axle (98), which is independent of the assembly (9'), is inserted longitudinally, protruding with its front portion for the coupling of the brake drum (74), and with its rear portion for the coupling of the balancer (7') (Figs. 23 and 24).

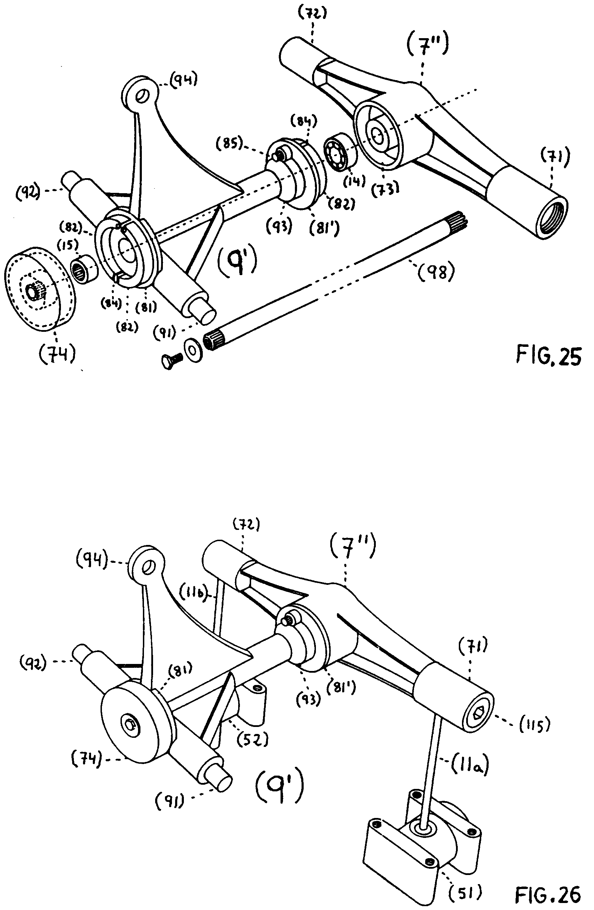

It is also possible to design the mechanism providing it with a double locking device. In this case, the assembly (9') will be provided with two brake discs (81, 81'), one located in the front portion and the other one in the rear. The one (81) of the front faces the independent drum (74) that is fastened to the axle (98) at its front end, and the one (81') in the rear faces the drum (73) that is incorporated into the balancer (7''). This balancer will be fastened to the axle (98) at its rear end (Figs. 25 and 26).

The two options for the locking of the balancer's rotating can be used either jointly or separately. In the latter case, one option may be reserved for a manual locking and the other for an automatic locking. That is to say, one of option may be for a temporary locking during operation and the other one for permanent locking when parking the vehicle.

With this we deem as concluded one method of construction of the "articulated balancer with oscillating axle having locking possibilities". However, in its adaption to the vehicle set forth herein, we deem necessary some considerations:

A) In view of the considerable oscillation to may be reached by the rear wheels of the vehicle if it carries the driver and one passenger, the adoption of all or of some of the below measures, or a combination thereof, is recommended with respect to a conventional motorcycle: a lengthening of 15 or 20 centimeters of the wheel base; the use of rear wheels of less diameter; a slight moving forward of the driver's position and a somewhat higher positioning of the passenger seat.

B) Because of the same reason (oscillating of the rear wheels), the secondary chain drive (or pulley) recommends that the drive pinions be located on the axle (6) of the swinging forks (5a, 5b), whereby a constant tension would be obtained in any situation, which would make unnecessary the use of tension devices. Both drive pinions would be actuated by a third pinion, located at a central position with respect to them, that would be the one receiving the driving force.

C) Although the width of the vehicle's gage (12) is small (for example, between 20 and 45 centimeters), the different running in the curves of each of the rear wheels requires the adopting of some sort of mechanism in order to release the tensions produced in the transmission. If, as recommended in the foregoing consideration, the pinions are located on the same axle as the swinging forks, between the central pinion and any of the lateral pinions, but simultaneously only with one of them, the possibility of a limited different rotating must be recognized. If the drive pinions were located in the engine, some type of the differential or a similar mechanism most be installed in the engine.

D) The locking of the balancer's rotating in a curve subjects the swinging forks and the rear wheels to greater stresses than in a conventional motorcycle. Therefore, the swinging forks must offer a greater resistance to the torsion; the rims must be of a lightweight alloy instead of radial and the tires shall be of a low profile to avoid their slipping off the rim.

E) The width of the rear gage (12) increases with the tilt given to the vehicle, according to the formula

$$A = \frac{a}{\cos \alpha},$$

wherein A is the width of the gage when the vehicle is in a tilted position, $\underline{a}$ is the width of the gage with the vehicle in a vertical position, and $\underline{\alpha}$ is the tilt angle of the vehicle with respect to the vertical. This widening of the gage entails certain transverse friction in the rear tires, which shall be insignificant while the vehicle is moving, including on steep slopes.

## Claims

1. A tricycle comprising:

    - a frame (1)
    - a front wheel (2) mounted upon a telescopic fork (3)
    - a left rear wheel (4a) mounted upon a left swinging fork (5a)
    - a right rear wheel (4b) mounted upon a right swinging fork (5b)
    - a transversal axle (6) which fastens the front part of said swinging forks (5a, 5b) to the frame (1), allowing them an independent oscillating movement.
    - an articulated balancer (7)
    - an assembly (9) fastening said balancer (7) to said frame (1) and coupling a shock absorber (10)
    - a left rod (11a) connecting the left swinging fork (5a) to the left end of the balancer (7)
    - a right rod (11b) connecting the right swinging fork (5b) to the right end of the balancer (7);

    the balancer (7) being perpendicular to the swinging forks (5a, 5b) at an upper or lower plane thereto and is fixed at its middle point to said assembly by an axle (97), parallel to said forks allowing a rotary motion characterised in that said rods (11a, 11b) being connected to said balancer and to said swinging forks by means of ball-and-socket joints, said joints being housed in said balancer and in said swinging forks, next to the area where said forks split; to provide suspension to the rear train, the assembly (9) is pivotally connected at its front ends (91, 92) to said frame (1), therefore providing an oscillating upward/downward movement to said axle (97), and to said shock absorber (10); said axle (97) is fastened to said assembly (9) from which it projects by the rear end (93); for coupling the shock absorber (10), said assembly (9) incorporates an upper arm (94) or a fastening device (95), depending upon that said assembly is placed either above or below the swinging forks (5a, 5b); the tricycle comprising a locking device (8) having two parts facing each other, the first part comprising a brake disc (81), shoes (82) and their guides (83), a drive cam (84) and its axle (85) and a spring (86), whilst the second part comprising a drum (73) which at its inner face, presents some corrugation; the brake disc (81) with all its elements being placed solidarily in the rear end (93) of the assembly (9) facing the drum (73) integrated in the balancer (7).

2. A Tricycle comprising:

    - a frame (1)
    - a front wheel (2) mounted upon a telescopic fork (3)

- a left rear wheel (4a) mounted upon a left swinging fork (5a)
- a right rear wheel (4b) mounted upon a right swinging fork (5b)
- a transversal axle (6) which fastens the front part of said swinging forks (5a, 5b) to the frame (1), allowing them an independent oscillating movement.
- an articulated balancer (7', 7")
- an assembly (9') fastening said balancer (7', 7") to said frame (1) and coupling a shock absorber (10)
- a left rod (11a) connecting the left swinging fork (5a) to the left end of the balancer (7', 7")
- a right rod (11b) connecting the right swinging fork (5b) to the right end of the balancer (7', 7");

the balancer (7', 7") being perpendicular to the swinging forks (5a, 5b) at an upper or lower plane thereto and is fixed at its middle point to said assembly by an axle (98), parallel to said forks allowing a rotary motion characterised in that said rods (11a, 11b) being connected to said balancer and to said swinging forks by means of ball-and-socket joints, said joints being housed in said balancer and in said swinging forks, next to the area where said forks split; to provide suspension to the rear train, the assembly (9') is pivotally connected at its front ends (91, 92) to said frame (1), therefore providing an oscillating upward/downward movement to said axle (98), and to said shock absorber (10); said axle (98) is an independent element longitudinally introduced in the assembly (9') being projected at its front part for the coupling of an independent brake drum (74) and at its rear part for the coupling of the balancer (7', 7"); for coupling the shock absorber (10), said assembly (9') incorporates an upper arm (94) or a fastening device (95), depending upon that said assembly is placed either above or below the swinging forks (5a, 5b); the tricycle comprising a locking device (8) having two parts facing each other, the first part comprising a brake disc (81), shoes (82) and their guides (83), a drive cam (84) and its axle (85) and a spring (86), whilst the second part comprising the drum (74) which at its inner face, presents some corrugation, the brake disc (81) with all its elements, being placed solidarily in the front central part of the assembly (9') facing the independent drum (74).

3. A Tricycle according to claim 2, characterized by having a second locking device, comprising a second brake disc, placed (81') with all its elements, solidarily at the rear end (93) of the assembly (9') facing the drum (73) integrated in the balancer (7").

**Patentansprüche**

1. Ein Dreirad, das

- einen Rahmen (1),
- ein an einer Teleskopgabel (3) angebrachtes Vorderrad (2),
- ein an einer linken Schwinggabel (5a) angebrachtes linkes Hinterrad (4a),
- ein an einer rechten Schwinggabel (5b) angebrachtes rechtes Hinterrad (4b),
- eine Querachse (6), die das Vorderteil der genannten hinteren Schwinggabeln (5a, 5b) am Rahmen (1) sichert und diesen eine unabhängige Schwingbewegung ermöglicht,
- einen Gelenkausgleicher (7),
- eine Gesamtheit (9), die den Ausgleicher (7) an dem Rahmen (1) sichert und die an den Stossdämpfer (10) ankoppelt,
- eine linke Schubstange (11a), die die linke Schwinggabel (5a) und das rechte Ende des Ausgleichers (7) anschliesst,
- eine rechte Schubstange (11b), die die rechte Schwinggabel (5b) an das rechte Ende des Ausgleichers (7) anschliesst,

umfasst, wobei der Ausgleicher (7) vertikal zu den Schwinggabeln (5a, 5b) in einer höheren oder tieferen Ebene zu diesen steht und an seinem Mittelpunkt an der genannten Gesamtheit durch eine parallel zu den Gabeln stehende Achse (97) befestigt ist, um eine Drehbewegung zu ermöglichen, dadurch gekennzeichnet, dass die Schubstangen (11a, 11b) an den Ausgleicher und an die Gabeln durch Kugelgelenkkupplungen angeschlossen sind, wobei die Kupplungen in dem Ausgleicher und in den Schwinggabeln aufgenommen sind, in der Nähe des Bereiches, in dem sich die Gabeln trennen; zur Aufhängung des hinteren Fahrgestelles ist die Gesamtheit (9) an ihren stirnseitigen Enden (91, 92) zapfenartig an dem Rahmen (1) angeschlossen und ermöglicht der Achse (97) und dem Stossdämpfer (10) auf diese Weise eine Schwingbewegung nach oben und nach unten; die Achse (97) ist am hinteren Ende (93) an der Gesamtheit (9) befestigt, von der aus sie sich erstreckt; zur Ankopplung des Stossdämpfers (10) beinhaltet die Gesamtheit (9) einen oberen Schenkel (94) oder eine Haltevorrichtung (95), je nach dem sich ob die Gesamtheit über oder unter den Schwinggabeln (5a, 5b) befindet; das Dreirad umfasst eine zwei einander gegenüberliegende Teile aufweisende Befestigungsvorrichtung (8), wobei der erste Teil eine Bremsscheibe (81), Bremsbacken (82) und deren Führungen (83), einen Antriebsnocken (84) mit seiner Achse (85) und eine Feder (86) beinhaltet, während der zweite Teil eine Trommel (73) unfasst, die an der Innenseite eine gewisse Wellung aufweist; wobei die Bremsscheibe (81) gemeinsam mit allen ihren Bestandteilen am der im Ausgleicher (7) integrierten Trommel (73) gegenüberliegenden hinteren Ende (93) der Gesamtheit (9) angeordnet ist.

2. Ein Dreirad, das

- einen Rahmen (1),
- ein an einer Teleskopgabel (3) angebrachtes Vorderrad (2),
- ein an einer linken Schwinggabel (5a) angebrachtes linkes Hinterrad (4a),
- ein an einer rechten Schwinggabel (5b) angebrachtes rechtes Hinterrad (4b),
- eine Querachse (6), die das Vorderteil der hinteren Schwinggabeln (5a, 5b) am Rahmen (1) sichert und diesen eine unabhängige Schwingbewegung ermöglicht,
- einen Gelenkausgleicher (7',7"),
- eine Gesamtheit (9'), die den Ausgleicher (7',7") an dem Rahmen (1) sichert und die an den Stossdämpfer (10) ankoppelt,
- eine linke Schubstange (11a), die die linke Schwinggabel (5a) and das rechte Ende des Ausgleichers (7',7") anschliesst,
- eine rechte Schubstange (11b), die die rechte Schwinggabel (5b) an das rechte Ende des Ausgleichers (7',7") anschliesst,

umfasst, wobei der Ausgleicher (7',7") vertikal zu den Schwinggabeln (5a, 5b) in einer höheren oder tieferen Ebene zu diesen steht und an seinem Mittelpunkt an der genannten Gesamtheit durch eine parallel zu den genannten Gabeln stehende Achse (98) befestigt ist, um eine Drehbewegung zu ermöglichen, dadurch gekennzeichnet, dass die Schubstangen (11a, 11b) an den Ausgleicher und an die Gabeln durch Kugelgelenkkupplungen angeschlossen sind, wobei die gennanten Kupplungen in dem Ausgleicher und in den Schwinggabeln aufgenommen sind, in der Nähe des Bereiches, in dem sich die genannten Gabeln trennen; zur Aufhängung des hinteren Fahrgestelles ist die Gesamtheit (9') an ihren stirnseitigen Enden (91, 92) zapfenartig an dem Rahmen (1) angeschlossen und ermöglicht der Achse (98) und dem Stossdämpfer (10) auf diese Weise eine Schwingbewegung nach oben und nach unten; dass die Achse (98) ein unabhängiger Bestandteil ist, der längs in die Gesamtheit (9') eingeführt ist und an der Stirnseite zur Ankopplung einer unabhängigen Bremstrommel (74) und an der Hinterseite zur Ankopplung des Ausgleichers (7', 7") hervorragt; zur Ankopplung des Stossdämpfers (10), beinhaltet die Gesamtheit (9') einen oberen Schenkel (94) oder eine Haltevorrichtung (95), je nach dem sich ob die Gesamtheit über oder unter den Schwinggabeln (5a, 5b) befindet; das Dreirad umfasst eine zwei einander gegenüberliegende Teile aufweisende Befestigungsvorrichtung (8), wobei der erste Teil eine Bremsscheibe (81), Bremsbacken (82) und deren Führungen (83), einen Antriebsnocken (84) mit seiner Achse (85) und eine Feder (86) beinhaltet, während der zweite Teil eine Trommel (74) umfasst, die an der Innenseite eine gewisse Wellung aufweist; wobei die Bremsscheibe (81) gemeinsam mit allen ihren Bestandteilen am mittleren Vorderteil der der unabhängigen Trommel (74) gegenüberliegenden Gesamtheit (9') angeordnet ist.

3. Ein Dreirad nach Anspruch 2, dadurch gekennzeichnet, dass es eine zweite Befestigungsvorrichtung aufweist, die eine zweite Bremsscheibe (81') umfasst, die gemeinsam mit allen ihren Bestandteilen am der im Ausgleicher (7', 7") integrierten Trommel (73) gegenüberliegenden hinteren Ende (93) der Gesamtheit (9') angeordnet ist.

**Revendications**

1. Un tricycle qui comprend:

- un cadre (1),
- une roue avant (2) montée dans une fourche télescopique (3),
- une roue arrière gauche (4a) montée dans une fourche basculante gauche (5a),
- une roue arrière droite (4b) montée dans une fourche basculante droite (5b),
- un axe transversal (6) qui fixe la partie avant de ces fourches basculantes (5a, 5b) sur le cadre (1), leur permettant un mouvement oscillatoire indépendant,
- un compensateur articulé (7),
- un ensemble (9) qui fixe ce compensateur (7) sur le cadre (1) et qui accouple à un amortisseur (10),
- une bielle gauche (11a) qui relie la fourche basculante gauche (5a) à l'extrémité gauche du compensateur (7),
- une bielle droite (11b) qui relie la fourche basculante droite (5b) à l'extrémité droite du compensateur (7),

le compensateur (7) étant perpendiculaire aux fourches basculantes (5a, 5b) sur un plan supérieur ou inférieur à celles-ci et se trouvant fixé en son point moyen sur cet ensemble à travers un axe (97) parallèle à ces fourches pour permettre un mouvement rotatoire, se caractérisant en ce que ces bielles (11a, 11b) sont reliées à ce compensateur et à ces fourches basculantes par des accouplements de rotule, ces accouplements étant logés dans ce compensateur et dans ces fourches basculantes, proches de la zone où ces fourches se séparent; afin de donner une suspension au train arrière, l'ensemble (9) est relié de façon pivotante dans ses extrémités frontales (91, 92) à ce cadre (1), assurant ainsi un mouvement oscillatoire vers le haut et vers le bas à cet axe (97) et à cet amortisseur (10); cet axe (97) est adhéré à cet ensemble (9), d'où il se projette, par l'extrémité arrière (93); pour accoupler l'amortisseur (10), cet ensemble (9) incorpore un bras supérieur (94) ou un dispositif de fixation (95), selon que cet ensemble soit situé sur ou sous les fourches basculantes (5a, 5b); le tricycle comprend un dispositif de fixation (8) pourvu de deux parties se trouvant face à face, la première partie comprenant un disque de frein (81), des sabots (82) et leurs guides (83), une came d'actionnement (84) avec son axe (85) et un ressort (86), tandis que la seconde partie comprend un tambour (73) qui présente un certain plissement dans sa face intérieure; le disque de frein (81) avec tous ses éléments se trouvant solidairement situé dans l'extrémité arrière (93) de l'ensemble (9), en regard du tambour (73) intégré dans le compensateur (7).

2. Un tricycle qui comprend:

   - un cadre (1),
   - une roue avant (2) montée dans une fourche télescopique (3),
   - une roue arrière gauche (4a) montée dans une fourche basculante gauche (5a),
   - une roue arrière droite (4b) montée dans une fourche basculante droite (5b),
   - un axe transversal (6) qui fixe la partie avant de ces fourches basculantes (5a, 5b) sur le cadre (1), en leur permettant un mouvement oscillatoire indépendant,
   - un compensateur articulé (7', 7"),
   - un ensemble (9') qui fixe ce compensateur (7', 7") sur ce cadre (1) et qui accouple à un amortisseur (10),
   - une bielle gauche (11a) qui relie la fourche basculante gauche (5a) à l'extrémité gauche du compensateur (7', 7"),
   - une bielle droite (11b) qui relie la fourche basculante droite (5b) à l'extrémité droite du compensateur (7' 7"),

   le compensateur (7', 7") étant perpendiculaire aux fourches basculantes (5a, 5b) sur un plan supérieur ou inférieur à celles-ci et se trouvant fixé en son point moyen sur cet ensemble à travers un axe (98) parallèle à ces fourches pour permettre un mouvement rotatoire, se caractérisant en ce que cettes bielles (11a, 11b) sont reliées à ce compensateur et à ces fourches basculantes par des accouplements de rotule, ces accouplements étant logés dans ce compensateur et dans ces fourches basculantes, proches de la zone où ces fourches se séparent; afin de donner une suspension au train arrière, l'ensemble (9') est relié de manière pivotante dans ses extrémités frontales (91, 92) à ce cadre (1), assurant ainsi un mouvement oscillatoire vers le haut et vers le bas à cet axe (98) et à cet amortisseur (10); cet axe (98) est un élément indépendant introduit longitudinalement dans l'ensemble (9'), en se projetant dans sa partie frontale pour l'accouplement d'un tambour de frein indépendant (74) et dans sa partie arrière pour l'accouplement du compensateur (7', 7"); pour accoupler l'amortisseur (10), cet ensemble (9') incorpore un bras supérieur (94) ou un dispositif de fixation (95), selon que cet ensemble soit situé sur ou sous les fourches basculantes (5a, 5b); le tricycle comprend un dispositif de fixation (8) pourvu de deux parties se trouvant face à face, la première partie comprenant un disque de frein (81), des sabots (82) et leurs guides (83), une came d'actionnement (84) avec son axe (85) et un ressort (86), tandis que la seconde partie comprend un tambour (74) qui présente un certain plissement dans sa face intérieure, le disque de frein (81) avec tous ses éléments se trouvant solidairement situé dans la partie avant centrale de l'ensemble (9'), en regard du tambour (74).

3. Un tricycle selon la revendication 2, se caractérisant en ce qu'il comporte un second dispositif de fixation, solidairement avec tous ses éléments dans l'extrémité arrière (93) de l'ensemble (9'), en regard du tambour (73) intégré dans le compensateur (7").

FIG. 1

FIG. 2

FIG. 3

FIG. 4

(13)

(93) (97)

(15)

(92)

(9)

(91)

(15)

(13)

FIG. 5

(7) (7) (7)

(4a) (4b) (4a) (4b) (4a)

(4b)

FIG. 6

FIG. 7

FIG. 8

FIG. 9

(7')

(72)

(71)

FIG.10

(94)

(14)

(92)

(93)

(81)

(q')

(15)

(91)

FIG.11

(95)

(14)

(92)

(93)

(81)

(q')

(15)

(91)

FIG.12

(71)

(114)

(112)

(113)

(114)

(115)

(111)

(115)

(114)

(113)

(112)

(114)

(51)

FIG. 13

(7)

(112) (113)

(114) (114)

(115)

(71)

(111)

FIG. 14

( 5a )

(51)

(112)

FIG. 15

FIG.16

FIG. 17

FIG. 18

FIG.20

FIG.19

FIG. 21

FIG. 22

FIG. 23

FIG. 24

FIG. 25

FIG. 26

FIG.27

FIG.28